# EUROPEAN PATENT SPECIFICATION

(11) **EP 2 865 524 B1**
(45) Date of publication and mention of the grant of the patent: **17.01.2018**
(21) Application number: 13806259.1
(22) Date of filing: 07.05.2013
(51) Int. Cl.: B41J 2/175, G06F 11/07, G06F 11/34

(54) **METHOD FOR RECORDING CHIP USAGE STATE INFORMATION, CHIP OF IMAGING BOX AND IMAGING BOX**
VERFAHREN ZUR AUFZEICHNUNG VON CHIPVERWENDUNGSZUSTANDSINFORMATIONEN, CHIP EINER ABBILDUNGSBOX UND ABBILDUNGSBOX
MÉTHODE D'ENREGISTREMENT D'INFORMATIONS D'ÉTAT D'UTILISATION DE PUCE, PUCE D'UN BOÎTIER D'IMAGERIE ET BOÎTIER D'IMAGERIE

(30) Priority: 21.06.2012 CN 201210209303
(43) Date of publication of application: 29.04.2015
(73) Proprietor: Apex Microelectronics Company Limited, Zhuhai City, Guangdong 519075 (CN)
(72) Inventor: LIU, Weichen, Zhuhai Guangdong 519075 (CN)
(74) Representative: J A Kemp
(86) International application number: PCT/CN2013/075275
(87) International publication number: WO 2013/189213

(56) References cited:
- EP-A1- 2 270 525
- CN-A- 101 082 796
- CN-A- 102 381 036
- CN-A- 102 765 256
- CN-U- 201 525 179
- GB-A- 2 346 830
- US-A1- 2004 041 275
- US-A1- 2007 064 040
- US-A1- 2010 100 357
- US-A1- 2012 054 374

## Description

### TECHNICAL FIELD

The present invention relates to imaging technologies and, in particular, relates to a method for recording chip usage state information, a chip of imaging box and an imaging box.

### BACKGROUND

With the development of imaging technologies, imaging devices such as copier, printer, facsimile machine, word processor etc are widely applied. An imaging device is provided with consumables such as an imaging box for convenience of replacement, where the imaging box is usually provided with a chip, which records information such as categories of recording materials stored in the imaging box, date of manufacture of the imaging box, number of imaging pages, remaining amount of recording materials etc. During the using process of the imaging box, the imaging device needs to update data in the chip of the imaging box continuously, so as to ensure that the chip always records the latest state of the imaging box. Therefore, the chip in the imaging box is especially important, if problems occur to the chip during the using process of the imaging box, then the whole imaging box will be unable to work. In order to guarantee the normal use of the imaging box, the chip is required to represent a high performance. The performance of the chip is significantly improved through improving manufacturing process of the chip and adopting new technologies etc, however, in practical applications, there will still be problems in some chips, which result in that the imaging box is unable to work.

In order to facilitate the manufacturer to find quality problems of the imaging box, an existing imaging box can record parameters such as temperature, moisture, number of pages printed, on-off times of the printer, whether the imaging box has been reinstalled or not, times of installation, application area, information of the manufacturer etc which relate to the imaging box, the manufacturer can find quality problems of the imaging box through collecting the information in the chip. However, the above state parameters can only represent the usage state of the imaging box, but the usage state of the chip itself is not recorded. If problems occur to the chip itself, the imaging box will be unable to work either. The above parameters recorded in the chip of the prior art cannot be used for fault analysis of the chip.

US2012054374 A1 discloses a method and technique for monitoring memory access. The method includes monitoring access to a memory unit, updating an activity cache associated with an incrementor with access data corresponding to accesses to the memory unit, monitoring a rate of access to the memory unit, adjusting a sample rate of the access data for storage in the memory unit based on the rate of access, and scaling a value of the access data based on the sample rate.

US2004041275 A1 discloses that a trace chip monitors a signal between a target logic chip having a data processing circuit mounted thereon and a memory chip having a memory storing data to be used by the target logic chip mounted therein, and traces an operation of the target logic chip.

US2010100357 A1 discloses a method for the collection and storage of information related to the operation of a chip module. The disclosed technology provides a chip data collection and storage controller.

### SUMMARY

In order to overcome the above defects of the prior art, the present invention provides a method for recording chip usage state information, a chip of imaging box and an imaging box, which provides powerful information to find and solve the communication problems between the chip and the imaging device.

The present invention provides a method for recording chip usage state information into a chip of an imaging box, the chip includes a substrate, and an information storage unit and a control unit which are provided on the substrate, the information storage unit includes a write-prior area and a normal read-write area, wherein the write-prior area is used for storing a chip usage state parameter of the chip. The method for recording chip usage state information includes: when the chip receives a read/write operation command sent by an imaging device or when the control unit on the chip monitors a communication interference signal, the control unit firstly points to an address of a storage area in the write-prior area, and updates the chip usage state parameter stored in the write-prior area; the control unit points to an address of the storage area in the normal read-write area and updates data recorded in each storage area in the normal read-write area after the control unit updates the chip usage state parameter stored in the write-prior area.

The present invention further provides a chip of imaging box, the chip includes: a substrate, and an information storage unit and a control unit which are provided on the substrate, the information storage unit includes a write-prior area and a normal read-write area, wherein the write-prior area is used for storing a chip usage state parameter, the control unit is configured to, when the chip receives a read/write operation command of an imaging device or when the control unit on the chip monitors a communication interference signal, firstly point to an address of a storage area in the write-prior area and update the chip usage state parameter stored in the write-prior area, wherein the control unit is further configured to point to an address of the storage area in the normal read-write area and update data recorded in each storage area in the normal read-write area after the control unit updates the chip usage state parameter stored in the write-prior area.

The present invention further provides an imaging box, which includes the chip of imaging box described above.

In the method for recording chip usage state information, the chip of imaging box and the imaging box provided by the present invention, the information storage unit of the chip is provided with a write-prior area, the chip usage state parameter recorded in the write-prior area can represent the usage state information of the chip itself, which provides powerful information to find and solve the communication problems between the chip and the imaging device, and thus is beneficial to find the reason of the faults occurred to the imaging box and the chip.

### BRIEF DESCRIPTION OF DRAWINGS

FIG. 1 is a flow diagram of a method for recording chip usage state information in a first embodiment of the present invention;
FIG. 2 is a schematic view of composition of a chip of imaging box in an embodiment of the present invention;
FIG. 3 is a schematic view of data arrangement of a chip information storage unit of an imaging box in the first embodiment of the present invention;
FIG. 4 is a flow diagram of a method for recording chip usage state information in a second embodiment of the present invention;
FIG. 5 is a schematic view of data arrangement of a chip information storage unit of an imaging box in the second embodiment of the present invention;
FIG. 6 is a flow diagram of a method for recording chip usage state information in a third embodiment of the present invention;
FIG. 7 is a schematic view of data arrangement of a chip information storage unit of an imaging box in the third embodiment of the present invention;
FIG. 8 is a flow diagram of a method for recording chip usage state information in a fourth embodiment of the present invention;
FIG. 9 is a schematic view of data arrangement of a chip information storage unit of an imaging box in the fourth embodiment of the present invention.

### DESCRIPTION OF EMBODIMENTS

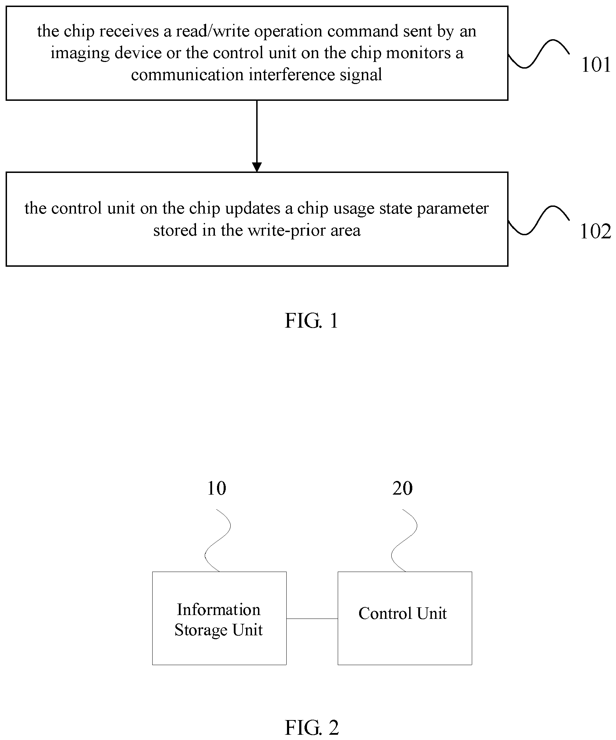

FIG. 1 is a flow diagram of a method for recording chip usage state information in a first embodiment of the present invention, the chip includes a substrate, and an information storage unit and a control unit which are provided on the substrate, the information storage unit includes a write-prior area and a normal read-write area, as shown in FIG. 1, the method includes:
Step 101, the chip receives a read/write operation command sent by an imaging device, or the control unit on the chip monitors a communication interference signal;
Step 102, the control unit on the chip updates a chip usage state parameter stored in the write-prior area; the chip usage state parameter above is used for fault analysis of the chip.

After executing step 102, the control unit on the chip can further update data recorded in each storage area in the normal read-write area.

An imaging box is a component of an imaging device, where the imaging box is installed on the imaging device, and the chip of imaging box is installed on the imaging box.

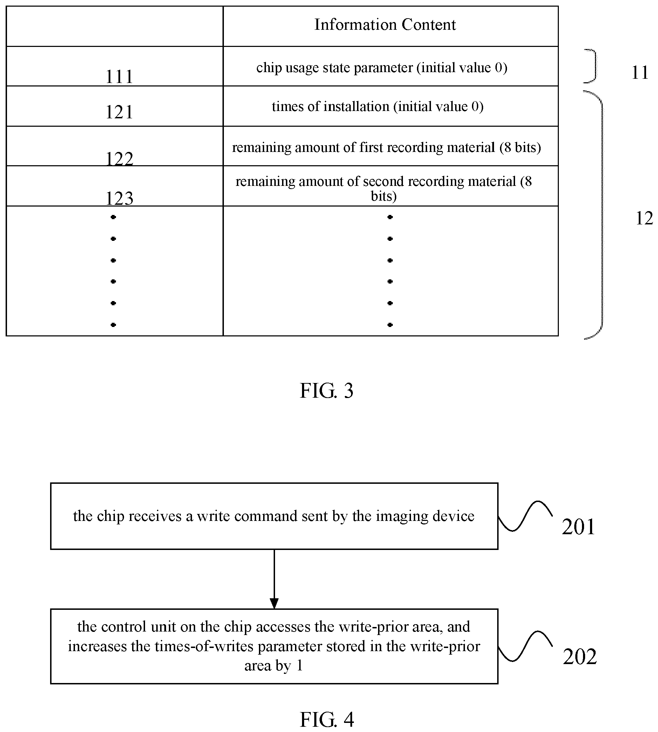

FIG. 2 is a schematic view of composition of a chip of imaging box in an embodiment of the present invention, FIG. 3 is a schematic view of data arrangement of a chip information storage unit of an imaging box in the first embodiment of the present invention; as shown in FIG. 2 and FIG. 3, the chip of imaging box in this embodiment includes: a substrate, and an information storage unit 10 and a control unit 20 which are provided on the substrate; the information storage unit 10 includes a write-prior area 11, and the information storage unit 10 further includes a normal read-write area 12; the write-prior area 11 is used for storing a chip usage state parameter of the chip, of which the initial value is 0. The storage areas in the normal read-write area respectively store state information of the imaging box which will change with the print operation, such as times of installation of the imaging box, remaining amount data of recording materials, number of pages printed etc, and identification data of the imaging box which will not change with the print operation, such as open time, date of manufacture, serial number etc of the imaging box. In this embodiment, a first storage area 121 in the normal read-write area 12 is used for storing data of times of installation of the imaging box, a second storage area 122 and a third storage area 123 are respectively used for storing remaining amount of a first recording material and remaining amount of a second recording material. The data stored in the normal read-write area 12 is used for the imaging device to perform normal read-write operations. The normal read-write operations are specifically: the imaging device reads identification data of the imaging box such as type of the imaging box, colour of the recording material, date of manufacture of the imaging box etc in the information storage unit 10, and state information of the imaging box such as remaining amount of recording materials, number of pages printed etc; and the imaging device writes the new state data of the imaging box such as remaining amount of recording materials, number of pages printed etc into the information storage unit 10, so as to update the state information of the imaging box. The control unit 20 is configured to update the chip usage state parameter stored in the write-prior area 11 when the chip receives a read/write operation command of the imaging device or receives a communication interference signal, the chip usage state parameter is used for fault analysis of the chip.

As shown in FIG. 1 to FIG. 3, when the chip receives a read/write operation command of the imaging device or the control unit 20 on the chip monitors a communication interference signal, the control unit 20 firstly points to the address of a storage area 111, the write-prior area 11 is accessed, and the chip usage state parameter stored in the write-prior area 11 is updated, which specifically is to increase the chip usage state parameter by 1; then the control unit 20 can further point to the address of the storage area 121, the normal read-write area 12 is accessed, and the imaging device updates the data of corresponding storage area in the normal read-write area 12.

The chip of imaging box, the imaging box and the method for recording chip usage state information provided by this embodiment can represent the usage state information of the chip itself through the chip usage state parameter recorded in the write-prior area 11, moreover, when the chip receives a read/write operation command sent by the imaging device or the control unit 20 on the chip monitors a communication interference signal, the control unit 20 will firstly point to the address of the storage area 111, the write-prior area 11 is accessed, and the chip usage state parameter stored in the write-prior area 11 is updated, thus the function of the usage state information will not be affected no matter whether the operation of the imaging device on the chip is successful or not, which provides powerful information to find and solve the communication problems between the chip and the imaging device, and is beneficial to find the reason of the faults occurred to the chip.

On the basis of the embodiments shown in FIG. 1 or FIG. 3, the chip usage state parameter in the method for recording chip usage state information or in the chip of imaging box can include:
one or more of the following parameters: a times-of-writes parameter, a normal communication parameter, a times-of-reads parameter, a times-of-communication-faults parameter and a times-of-communication-interference parameter.

Either working environment of the chip of imaging box, misoperation of the user, running out of read-write service life of the chip, or faults of the chip itself will lead to a fault of the chip. If a fault occurs to the chip of imaging box when the chip was used only for a few times, then the fault may possibly be caused by the performance problem of the chip itself; if the chip of imaging box has been read or written for many times, the reason of the fault may be that the chip is running out of normal service life.

When a fault occurs to the chip of imaging box, through reading the chip usage state parameter in the write-prior area of the information storage unit in the chip of imaging box and performing data analysis on the chip usage state parameter, it can be determined whether the fault occurred due to the performance problem of the chip itself or that the normal service life is running out, or the times of normal communication, times of communication faults and times of communication interference are obtained, further, by combining with data of usage state of the imaging box recorded in each storage area in the normal read-write area, it is beneficial to finding the reason which causes the fault of the chip of imaging box and the fault of the imaging box.

On the basis of the first embodiment of the present invention, in a second embodiment of the present invention, the chip usage state parameter includes a times of writes parameter. FIG. 4 is a flow diagram of a method for recording chip usage state information in the second embodiment of the present invention, as shown in FIG. 4, when the chip receives a read/write operation command sent by the imaging device, the control unit on the chip updates the chip usage state parameter stored in the write-prior area, which includes:
Step 201, the chip receives a write command sent by the imaging device;
Step 202, the control unit on the chip accesses the write-prior area, and increases the times of writes parameter stored in the write-prior area by 1;

After executing step 202, the control unit on the chip can further update data recorded in each storage area in the normal read-write area.

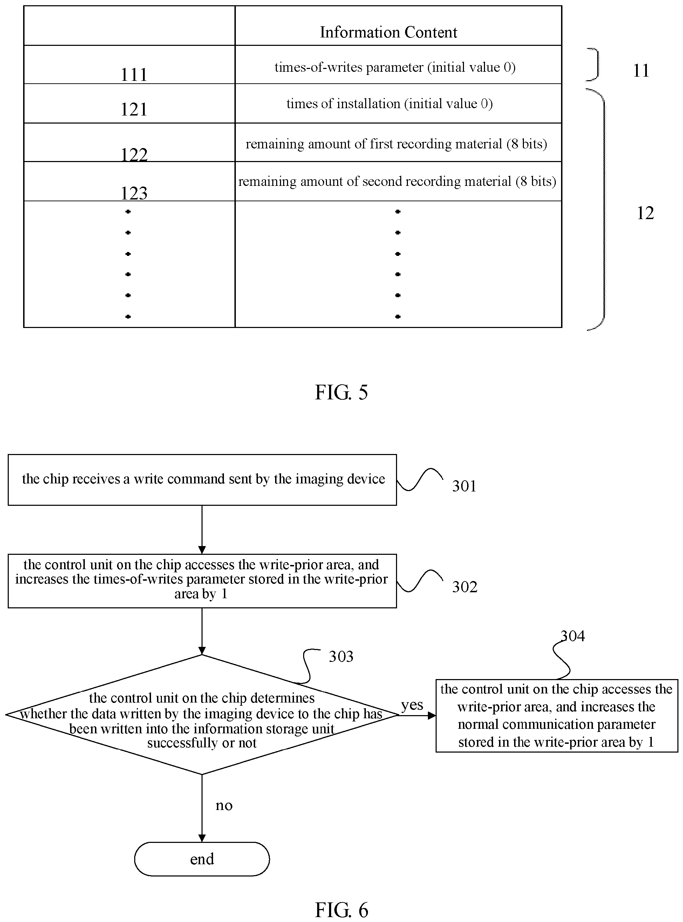

FIG. 5 is a schematic view of data arrangement of a chip information storage unit of an imaging box in the second embodiment of the present invention; as shown in FIG. 2 and FIG. 5, the chip of imaging box in this embodiment includes: a substrate, and an information storage unit 10 and a control unit 20 which are provided on the substrate; the information storage unit 10 includes a write-prior area 21, and the information storage unit 10 can further include a normal read-write area 22; the write-prior area 21 is used for storing the times of writes parameter, of which the initial value is 0. The storage areas in the normal read-write area respectively store state information of the imaging box which will change with the print operation, such as times of installations of the imaging box, remaining amount data of recording materials, number of pages printed etc, and identification data of the imaging box which will not change with the print operation, such as open time, date of manufacture, serial number etc of the imaging box. In this embodiment, a first storage area 221 in the normal read-write area 22 is used for storing data of times of installation of the imaging box, a second storage area 222 and a third storage area 223 are respectively used for storing remaining amount of a first recording material and remaining amount of a second recording material. The data stored in the normal read-write area 22 is used for the imaging device to perform normal read-write operations. The normal read-write operations are specifically: the imaging device reads identification data of the imaging box such as type of the imaging box, colour of the recording material, date of manufacture of the imaging box etc in the information storage unit, and state information of the imaging box such as remaining amount of recording materials, number of pages printed etc; and the imaging device writes the new state data of the imaging box such as remaining amount of recording materials, number of pages printed etc into the information storage unit, so as to update the state information of the imaging box.

As shown in FIG. 2, FIG. 4 and FIG. 5, when the chip receives a write command sent by the imaging device, the control unit 20 on the chip firstly points to the address of a storage area 211, the write-prior area 21 is accessed, and the times of writes parameter stored in the write-prior area 21 is updated, which specifically is to increase the times of writes parameter by 1; then the control unit 20 points to the address of the storage area 221, the normal read-write area 22 is accessed, and the imaging device updates the data of corresponding storage area in the normal read-write area 22.

When a fault occurs to the chip of imaging box provided by the second embodiment, through reading the times of writes parameter in the write-prior area 21 of the information storage unit in the chip of imaging box, the times of writes of the chip can be determined, thus it can be determined whether the fault occurred due to the performance problem of the chip itself or that the normal service life is running out.

On the basis of the second embodiment of the present invention, the chip usage state parameter in a third embodiment of the present invention further include a normal communication parameter; FIG. 6 is a flow diagram of a method for recording chip usage state information in the third embodiment of the present invention, as shown in FIG. 4 and FIG. 6, step 301 and step 302 are the same with step 201 and step 202 in the embodiment shown in FIG. 4, the method further includes:
Step 303, the control unit on the chip determines whether the data written by the imaging device to the chip has been written into the information storage unit successfully or not, if yes, execute step 304, or else, the process ends;
Step 304, the control unit on the chip accesses the write-prior area, and increases the normal communication parameter stored in the write-prior area by 1.

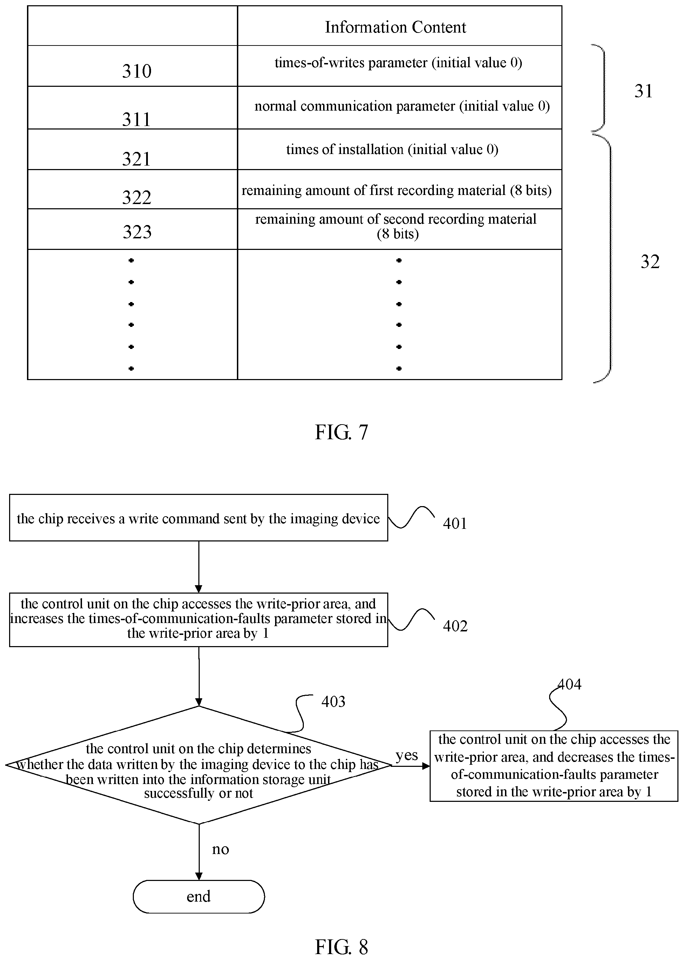

FIG. 7 is a schematic view of data arrangement of a chip information storage unit of an imaging box in the third embodiment of the present invention; as shown in FIG. 2 and FIG. 7, the chip of imaging box in this embodiment includes: a substrate, and an information storage unit 10 and a control unit 20 which are provided on the substrate; the information storage unit 10 includes a write-prior area 31, and the information storage unit 10 can further include a normal read-write area 32; a first storage area 310 in the write-prior area 31 is used for storing the times of writes parameter, of which the initial value is 0. A second storage area 311 in the write-prior area 31 is used for storing the normal communication parameter of the chip, of which the initial value is 0. A first storage area 321 in the normal read-write area 32 is used for storing data of times of installation of the imaging box, a second storage area 322 and a third storage area 323 are respectively used for storing remaining amount of a first recording material and remaining amount of a second recording material. In addition, the normal read-write area 32 can further store other data, such as number of pages printed, date of manufacture etc which are parameters related to the imaging box, for the imaging device to perform normal read-write operations. The normal read-write operations are specifically: the imaging device reads identification data of the imaging box such as type of the imaging box, colour of the recording material, date of manufacture of the imaging box etc in the information storage unit, and state information of the imaging box such as remaining amount of recording materials, number of pages printed etc; and the imaging device writes the new state data of the imaging box such as remaining amount of recording materials, number of pages printed etc into the information storage unit, so as to update the state information of the imaging box.

If the imaging device sends a write command to the chip of imaging box provided by the third embodiment of the present invention, but the data is not written into the information storage unit 10 successfully, there will be a situation that the times of writes parameter stored in the storage area 310 of the write-prior area 31 is larger than the normal communication parameter stored in the storage area 311 of the write-prior area 31. Thus the times of communication faults occurred to the chip can be determined through reading the time of writes parameter stored in the storage area 310 and the normal communication parameter stored in the storage area 311 of the write-prior area 31 in the information storage unit of the chip, and it can be specifically determined that in which time of executing the write operation command did the fault occur to the chip. Of course, the normal communication parameter can also be recorded through the following operations: when the chip receives a write command sent by the imaging device, the control unit on the chip accesses the write-prior area, and increases the normal communication parameter stored in the write-prior area by 1; after the communication, the control unit on the chip determines whether the data written by the imaging device to the chip has been written into the information storage unit successfully or not, if not, then decreases the normal communication parameter by 1, if yes, then the process ends.

On the basis of the first embodiment of the present invention, in a fourth embodiment of the present invention, the chip usage state parameter includes a times of communication faults parameter. FIG. 8 is a flow diagram of a method for recording chip usage state information in the fourth embodiment of the present invention, as shown in FIG. 8, when the chip receives a read/write operation command sent by the imaging device, the control unit on the chip updates the chip usage state parameter stored in the write-prior area, which includes:
Step 401, the chip receives a write command sent by the imaging device;
Step 402, the control unit on the chip accesses the write-prior area, and increases the times of communication faults parameter stored in the write-prior area by 1;
Step 403, the control unit on the chip determines whether the data written by the imaging device to the chip has been written into the information storage unit successfully or not, if yes, execute step 404, or else, the process ends;
Step 404, the control unit on the chip accesses the write-prior area, and decreases the times of communication faults parameter stored in the write-prior area by 1.

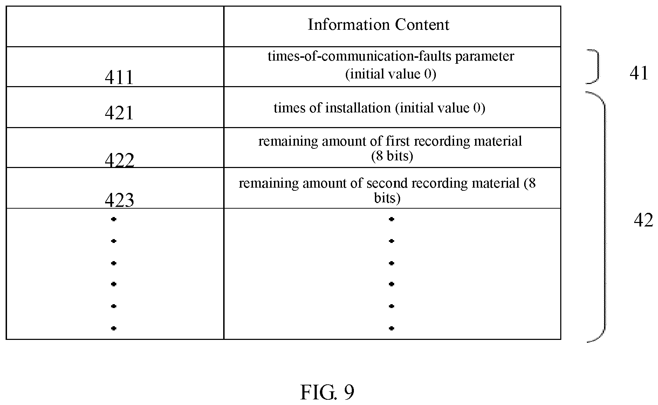

FIG. 9 is a schematic view of data arrangement of a chip information storage unit of an imaging box in the fourth embodiment of the present invention; as shown in FIG. 2 and FIG. 9, the chip of imaging box in this embodiment includes: a substrate, and an information storage unit 10 and a control unit 20 which are provided on the substrate; the information storage unit 10 includes a write-prior area 41, and the information storage unit 10 can further include a normal read-write area 42; a storage area 411 in the write-prior area 41 is used for storing the times of communication faults parameter, of which the initial value is 0. The storage areas in the normal read-write area respectively store state information of the imaging box which will change with the print operation, such as times of installation of the imaging box, remaining amount of recording materials, number of pages printed etc, and identification data of the imaging box which will not change with the printing operation, such as open time, date of manufacture, serial number etc of the imaging box. In this embodiment, a first storage area 421 in the normal read-write area 42 is used for storing data of times of installation of the imaging box, a second storage area 422 and a third storage area 423 are respectively used for storing remaining amount of a first recording material and remaining amount of a second recording material. The data stored in the normal read-write area 42 is used for the imaging device to perform normal read-write operations. The normal read-write operations are specifically: the imaging device reads identification data of the imaging box such as type of the imaging box, colour of the recording material, date of manufacture of the imaging box etc in the information storage unit, and state information of the imaging box such as remaining amount of recording materials, number of pages printed etc; and the imaging device writes the new state data of the imaging box such as remaining amount of recording materials, number of pages printed etc into the information storage unit, so as to update the state information of the imaging box.

As shown in FIG. 2, FIG. 8 and FIG. 9, when the chip receives a write command sent by an imaging device, the control unit 20 on the chip firstly points to the address of the storage area 411, the write-prior area 41 is accessed, and the times of communication faults parameter stored in the write-prior area 41 is updated, which specifically is to increase the times of communication faults parameter by 1; the control unit on the chip determines whether the data written by the imaging device to the chip has been written into the information storage unit successfully or not, if yes, the control unit 20 on the chip points to the address of the storage area 411, the write-prior area 41 is accessed again, and the times of communication faults parameter stored in the write-prior area 41 is updated, which specifically is to decreases the times of communication faults parameter by 1.

If the imaging device sends a write command to the chip of imaging box provided by the fourth embodiment of the present invention, but the data written by the imaging device to the chip was not written into the information storage unit successfully, the imaging device will resend a write command. If the chip can write the data, which is sent by the imaging device to the chip, into the information storage unit successfully when the imaging device resends the write command, then the imaging box is enable to work, but the data of the times of communication faults parameter will be stored in the write-prior area 41, which can represent the unsuccessful times of writes of the data into the information storage unit; if the imaging device sends the write command for multiple times, but the chip still does not write the data, which is sent by the imaging device to the chip, into the information storage unit successfully, then the imaging box is unable to work, the data of the times of communication faults parameter will be stored in the write-prior area 41. In this way, whether a fault occurs to the chip of imaging box or not and the times of communication faults can be determined through reading the times of communication faults parameter stored in the storage area 411 of the write-prior area 41 in the information storage unit of the chip.

On the basis of the first embodiment of the present invention, the chip usage state parameter in a fifth embodiment of the present invention includes a times of reads parameter. The procedure of the method for recording chip usage state information and the data arrangement of the information storage unit of the chip of imaging box in this embodiment are substantially the same with those in the second embodiment, the difference therein is only to replace the write command sent by the imaging device with a read operation command sent by the imaging device, and replace the times of writes parameter with a times of reads parameter. When the chip receives the read/write operation command sent by the imaging device, the control unit on the chip updates the chip usage state parameter stored in the write-prior area, which includes:
when the chip receives a read command sent by the imaging device, the control unit on the chip accesses the write-prior area, and increases the times of reads parameter stored in the write-prior area by 1.

In the chip of imaging box in this embodiment, the control unit is specifically configured to access the write-prior area and increases the times of reads parameter stored in the write-prior area by 1 when the chip receives a read command sent by the imaging device.

When a fault occurs to the chip of imaging box provided by the fifth embodiment of the present invention, through reading the times of reads parameter in the write-prior area of the information storage unit in the chip of imaging box, the times of reads of the chip can be determined, thus it can be determined whether the fault occurred due to the performance problem of the chip itself or that the normal service life is running out.

On the basis of the first embodiment of the present invention, in a sixth embodiment of the present invention, the chip usage state parameter includes a times of communication interference parameter; in the method for recording chip usage state information, when the control unit on the chip monitors a communication interference signal, the control unit on the chip updates the chip usage state parameter stored in the write-prior area, which includes:
the control unit monitors the communication signal sent by the imaging device all the time, when the chip is in a non-read-write state, and when the control unit on the chip monitors a high pulse signal from the imaging device, the control unit accesses the write-prior area, and increases the times of communication interference parameter stored in the write-prior area by 1;
when the chip is in a read-write state, the control unit on the chip compares the voltage of the received communication signal with a preset voltage threshold, when the voltage of the communication signal exceeds the voltage threshold, accesses the write-prior area, and increases the times of communication interference parameter stored in the write-prior area by 1; preferably, the above voltage threshold can be set as 5V.

The chip of imaging box in this embodiment includes: the control unit is specifically configured to access the write-prior area and increase the times of communication interference parameter stored in the write-prior area by 1 when the chip is in a non-read-write state and monitors a high pulse signal from the imaging device; compare the voltage of the received communication signal with a preset voltage threshold when the chip is in a read-write state, and when the voltage of the communication signal exceeds the voltage threshold, access the write-prior area and increase the times of communication interference parameter stored in the write-prior area by 1.

When a fault occurs to the chip of imaging box provided by the sixth embodiment of the present invention, through reading the times of communication interference parameter stored in the write-prior area of the information storage unit in the chip of imaging box, the times of interference suffered by the chip during the communication process can be determined, which is beneficial to finding the reason of the faults occurred to the chip.

The present invention further provides an imaging box, which includes a chip of imaging box in any of the above embodiments, through reading the chip usage state parameter, which represents the usage state of the chip, in the write-prior area of the information storage unit in the chip of imaging box and/or reading the data of the usage state of the imaging box recorded in each storage area of the normal read-write area, the reason of the faults occurred to the imaging box and the chip of imaging box installed thereon can be found.

In addition, as for the prior art, the chip stores the information of remaining amount of recording materials, if the recording materials in the imaging box run out (i.e. the information of remaining amount of recording materials reaches a threshold), the chip will no longer work, and the imaging box will no longer work either even if the imaging box is refilled, which causes a waste and environment pollution. In order to solve the problem, there is a kind of reset chip in the prior art: a reset module is added on a disposable chip, the module presets a reset threshold (for example, the information of remaining amount of recording materials is 10%), when the information of remaining amount of recording materials stored in the chip reaches the threshold, the chip will reset automatically (for example, the information of remaining amount of recording materials is updated as 100%), and the chip after reset can represent a new imaging box. With respect to the reset chip, since the write-prior area and the normal read-write area are provided separately in all embodiments of the present invention, that is to say the information such as information of remaining amount of recording materials etc is stored in the normal read-write area, therefore, when the information of remaining amount of recording materials stored in the chip reaches the threshold, the data updated is the data in the normal read-write area, and the data of the chip usage state parameter which is recorded in the write-prior area and represents the chip usage state information will not lost due to reset of the chip.

In the method for recording chip usage state information, the chip of imaging box and the imaging box provided by the present invention, as a result of the arrangement of the write-prior area in the information storage unit of the chip of imaging box and the method that when the chip receives a read/write operation command sent by the imaging device or the control unit on the chip monitors a communication interference signal, the write-prior area will firstly be accessed and the chip usage state parameter are updated, in the chip of imaging box, the imaging box and the method for recording chip usage state information provided by these embodiments, the usage state information of the chip itself can be represented through the chip usage state parameter recorded in the write-prior area, moreover, since the write-prior area will firstly be accessed, the function of the usage state information will not be affected no matter whether the operation of the imaging device on the chip is successful or not, which provides powerful information to find and solve the communication problems between the chip and the imaging device. When a fault occurs to the chip of imaging box, through reading the chip usage state parameter in the write-prior area of the information storage unit in the chip of imaging box and performing data analysis on the chip usage state parameter, it can be determined whether the fault occurred due to the performance problem of the chip itself or that the normal service life is running out, or the times of normal communication, times of communication faults and times of communication interference are obtained, further, by combining with data of usage state of the imaging box recorded in each storage area in the normal read-write area, it is beneficial to finding the reason which causes the fault of the imaging box and the fault of the chip.

The imaging device according to the present invention can be a device having imaging functions such as printer, facsimile machine, copier, word processor, all-in-one machine etc, the imaging box can be an imaging component installed on the imaging device such as ink cartridge, toner cartridge etc, and the recording material can be ink, toner etc.

Finally, it should be noted that the above embodiments are merely provided for describing the technical solutions of the present invention, but not intended to limit the present invention. It should be understood by those of ordinary skill in the art that although the present invention has been described in detail with reference to the foregoing embodiments, modifications can be made to the technical solutions described in the foregoing embodiments, or equivalent replacements can be made to some of or all of the technical features in the technical solutions; but such modifications or replacements will not cause the essence of corresponding technical solutions to depart from the scope of the technical solutions of the embodiments of the present invention.

## Claims

1. A method for recording chip usage state information into a chip of an imaging box, wherein the chip comprises a substrate, and an information storage unit (10) and a control unit (20) which are provided on the substrate, the information storage unit (10) comprises a write-prior area (11) and a normal read-write area (12), wherein the write-prior area (11) is used for storing a chip usage state parameter of the chip, wherein the method comprises:
when the chip receives a read/write operation command sent by an imaging device or when the control unit (20) on the chip monitors a communication interference signal, the control unit (20) firstly points to an address of a storage area (111) in the write-prior area (11), and updates the chip usage state parameter stored in the write-prior area (11);
the control unit (20) points to an address of the storage area (121) in the normal read-write area (12) and updates data recorded in each storage area in the normal read-write area (12) after the control unit (20) updates the chip usage state parameter stored in the write-prior area (11).

2. The method for recording chip usage state information according to claim 1, wherein the chip usage state parameter comprises:
one or more of the following parameters: a times-of-writes parameter, a normal communication parameter, a times-of-reads parameter, a times-of-communication-faults parameter and a times-of-communication-interference parameter.

3. The method for recording chip usage state information according to claim 2, wherein the chip usage state information parameter comprises the times-of-writes parameter, and the control unit (20) on the chip updating the chip usage state parameter stored in the write-prior area (11) when the chip receives the read/write operation command sent by the imaging device comprises:
when the chip receives a write operation command sent by the imaging device, the control unit (20) on the chip accesses the write-prior area (11), and increases the times-of-writes parameter stored in the write-prior area (11) by 1.

4. The method for recording chip usage state information according to claim 3, wherein the chip usage state parameter further comprises the normal communication parameter, the method further comprises:
when the control unit (20) on the chip determines that data written by the imaging device to the chip has been successfully written into the information storage unit (10), the control unit (20) accesses the write-prior area (11), and increases the normal communication parameter stored in the write-prior area (11) by 1.

5. The method for recording chip usage state information according to claim 2, wherein the chip usage state parameter comprises the times-of-communication-faults parameter, and the control unit (20) on the chip updating the chip usage state parameter stored in the write-prior area (11) when the chip receives the read/write operation command sent by the imaging device comprises:
when the chip receives a write operation command sent by the imaging device, the control unit (20) on the chip accesses the write-prior area (11), and increases the times-of-communication-faults parameter stored in the write-prior area (11) by 1;
when the control unit (20) on the chip determines that data written by the imaging device to the chip has been successfully written into the information storage unit (10), the control unit (20) accesses the write-prior area (11), and decreases the times-of-communication-faults parameter stored in the write-prior area (11) by 1.

6. The method for recording chip usage state information according to claim 2, wherein the chip usage state parameter comprises the times-of-reads parameter, and the control unit (20) on the chip updating the chip usage state parameter stored in the write-prior area (11) when the chip receives the read/write operation command sent by the imaging device comprises:
when the chip receives a read command sent by the imaging device, the control unit (20) on the chip accesses the write-prior area (11), and increases the times-of-reads parameter stored in the write-prior area (11) by 1.

7. The method for recording chip usage state information according to claim 2, wherein the chip usage state parameter comprises the times-of-communication-interference parameter, and the control unit (20) on the chip updating the chip usage state parameter stored in the write-prior area (11) when the control unit (20) on the chip monitors the communication interference signal comprises:
when the chip is in a non-read-write state, and when the control unit (20) on the chip monitors a high pulse signal from the imaging device, the control unit (20) accesses the write-prior area (11), and increases the times-of-communication-interference parameter stored in the write-prior area (11) by 1;
when the chip is in a read-write state, the control unit (20) on the chip compares a voltage of the received communication signal with a preset voltage threshold, when the voltage of the communication signal exceeds the voltage threshold, the control unit (20) accesses the write-prior area (11), and increases the times-of-communication-interference parameter stored in the write-prior area (11) by 1.

8. A chip of an imaging box comprising: a substrate, and an information storage unit (10) and a control unit (20) which are provided on the substrate, wherein the information storage unit (10) comprises a write-prior area (11) and a normal read-write area (12), wherein the write-prior area (11) is used for storing a chip usage state parameter of the chip, the control unit (20) is configured to, when the chip receives a read/write operation command of an imaging device or when the control unit (20) on the chip monitors a communication interference signal, firstly point to an address of a storage area (111) in the write-prior area (11) and update the chip usage state parameter stored in the write-prior area (11), wherein the control unit (20) is further configured to point to an address of the storage area (121) in the normal read-write area (12) and update data recorded in each storage area in the normal read-write area (12) after the control unit (20) updates the chip usage state parameter stored in the write-prior area (11).

9. The chip of an imaging box according to claim 8, wherein the chip usage state parameter stored in the write-prior area (11) comprises:
one or more of the following: a times-of-writes parameter, a normal communication parameter, a times-of-reads parameter, a times-of-communication-faults parameter and a times-of-communication-interference parameter.

10. The chip of an imaging box according to claim 9, wherein, when the chip usage state parameter comprises the times-of-writes parameter, the control unit is specifically configured to access the write-prior area (11) and increase the times-of-writes parameter stored in the write-prior area (11) by 1 when the chip receives a write operation command sent by the imaging device.

11. The chip of an imaging box according to claim 10, wherein, when the chip usage state parameter further comprises the normal communication parameter, the control unit is further configured to access the write-prior area (11) and increase the normal communication parameter stored in the write-prior area (11) by 1 when determining that data written by the imaging device to the chip has been successfully written into the information storage unit (10).

12. The chip of an imaging box according to claim 9, wherein the chip usage state information parameter comprises the times-of-communication-faults parameter, the control unit (20) is specifically configured to access the write-prior area (11) and increase the times-of-communication-faults parameter stored in the write-prior area (11) by 1 when the chip receives a write operation command sent by the imaging device; access the write-prior area (11) and decrease the times-of-communication-faults parameter stored in the write-prior area (11) by 1 when determining that data written by the imaging device to the chip has been successfully written into the information storage unit (10).

13. The chip of an imaging box according to claim 9, wherein, when the chip usage state parameter comprises the times-of-reads parameter, the control unit is specifically configured to access the write-prior area (11) and increase the times of reads parameter stored in the write-prior area (11) by 1 when the chip receives a read command sent by the imaging device.

14. The chip of an imaging box according to claim 9, wherein the chip usage state parameter comprises the times-of-communication-interference parameter, the control unit (20) is specifically configured to: access the write-prior area (11) and increase the times-of-communication-interference parameter stored in the write-prior area (11) by 1 when the chip is in a non-read-write state and monitors a high pulse signal from the imaging device; compare a voltage of the received communication signal with a preset voltage threshold when the chip is in a read-write state, and access the write-prior area (11) and increase the times of communication interference parameter stored in the write-prior area (11) by 1 when the voltage of the communication signal exceeds the voltage threshold.

15. An imaging box, comprising a chip of an imaging box according to any one of claims 8-14.

## Patentansprüche

1. Verfahren zum Aufzeichnen von Chipverwendungs-Zustandsinformationen in einem Chip einer Abbildungsbox, wobei der Chip ein Substrat und eine Informationsspeichereinheit (10) und eine Steuereinheit (20), die auf dem Substrat bereitgestellt sind, umfasst, wobei die Informationsspeichereinheit (10) einen Vor-Schreib-Bereich (11) und einen normalen Lese-Schreib-Bereich (12) umfasst, wobei der Vor-Schreib-Bereich (11) zum Speichern eines Chipverwendungs-Zustandsparameters des Chips verwendet wird, wobei das Verfahren Folgendes umfasst:
wenn der Chip einen von einer Abbildungsvorrichtung gesendeten Lese-/Schreib-Operationsbefehl erhält oder wenn die Steuereinheit (20) auf dem Chip ein KommunikationsInterferenzsignal beobachtet, verweist die Steuereinheit (20) zunächst auf einen Speicherbereich (111) im Vor-Schreib-Bereich (11) und aktualisiert den im Vor-Schreib-Bereich (11) gespeicherten Chipverwendungs-Zustandsparameter;
die Steuereinheit (20) verweist auf eine Adresse des Speicherbereichs (121) im normalen Lese-Schreib-Bereich (12) und aktualisiert in jedem Speicherbereich im normalen Lese-Schreib-Bereich (12) aufgezeichnete Daten, nachdem die Steuereinheit (20) den im Vor-Schreib-Bereich (11) gespeicherten Chipverwendungs-Zustandsparameter aktualisiert.

2. Verfahren zum Aufzeichnen von Chipverwendungs-Zustandsinformationen nach Anspruch 1, wobei der Chipverwendungs-Zustandsparameter Folgendes umfasst:
einen oder mehrere der folgenden Parameter: einen Male-von-Schreiben-Parameter, einen normalen Kommunikationsparameter, einen Male-von-Lesen-Parameter, einen Male-von-Kommunikationsfehler-Parameter und einen Male-von-Kommunikations-Interferenz-Parameter.

3. Verfahren zum Aufzeichnen von Chipverwendungs-Zustandsinformationen nach Anspruch 2, wobei der Chipverwendungs-Zustandsinformations-Parameter den Male-von-Schreiben-Parameter umfasst und die Steuereinheit (20) auf dem Chip, die den Chipverwendungs-Zustandsparameter, der im Vor-Schreib-Bereich (11) gespeichert ist, aktualisiert, wenn der Chip den von der Abbildungsvorrichtung gesendeten Lese-/Schreib-Operationsbefehl erhält, Folgendes umfasst:
wenn der Chip einen von der Abbildungsvorrichtung gesendeten Schreib-Operationsbefehl erhält, greift die Steuereinheit (20) auf dem Chip auf den Vor-Schreib-Bereich (11) zu und erhöht den im Vor-Schreib-Bereich (11) gespeicherten Male-von-Schreiben-Parameter um 1.

4. Verfahren zum Aufzeichnen von Chipverwendungs-Zustandsinformationen nach Anspruch 3, wobei der Chipverwendungs-Zustandsparameter ferner den normalen Kommunikationsparameter umfasst, wobei das Verfahren ferner Folgendes umfasst:
wenn die Steuereinheit (20) auf dem Chip bestimmt, dass von der Abbildungsvorrichtung an den Chip geschriebene Daten erfolgreich in die Informationsspeichereinheit (10) geschrieben worden sind, greift die Steuereinheit (20) auf den Vor-Schreib-Bereich (11) zu und erhöht den im Vor-Schreib-Bereich (11) gespeicherten normalen Kommunikationsparameter um 1.

5. Verfahren zum Aufzeichnen von Chipverwendungs-Zustandsinformationen nach Anspruch 2, wobei der Chipverwendungs-Zustandsparameter den Male-von-Kommunikationsfehler-Parameter umfasst und die Steuereinheit (20) auf dem Chip, die den im Vor-Schreib-Bereich (11) gespeicherten Chipverwendungs-Zustandsparameter aktualisiert, wenn der Chip den von der Abbildungsvorrichtung gesendeten Lese-/Schreib-Operationsbefehl erhält, Folgendes umfasst:
wenn der Chip einen von der Abbildungsvorrichtung gesendeten Schreib-Operationsbefehl erhält, greift die Steuereinheit (20) auf dem Chip auf den Vor-Schreib-Bereich (11) zu und erhöht den im Vor-Schreib-Bereich (11) gespeicherten Male-von-Kommunikationsfehler-Parameter um 1;
wenn die Steuereinheit (20) auf dem Chip bestimmt, dass von der Abbildungsvorrichtung an den Chip geschriebene Daten erfolgreich in die Informationsspeichereinheit (10) geschrieben worden sind, greift die Steuereinheit (20) auf den Vor-Schreib-Bereich (11) zu und verringert den im Vor-Schreib-Bereich (11) gespeicherten Male-von-Kommunikationsfehler-Parameter um 1.

6. Verfahren zum Aufzeichnen von Chipverwendungs-Zustandsinformationen nach Anspruch 2, wobei der Chipverwendungs-Zustandsparameter den Male-von-Lesen-Parameter umfasst und die Steuereinheit (20) auf dem Chip, die den im Vor-Schreib-Bereich (11) gespeicherten Chipverwendungs-Zustandsparameter aktualisiert, wenn der Chip den von der Abbildungsvorrichtung gesendeten Schreib-/Lese-Operationsbefehl erhält, Folgendes umfasst:
wenn der Chip einen von der Abbildungsvorrichtung gesendeten Schreibbefehl erhält, greift die Steuereinheit (20) auf dem Chip auf den Vor-Schreib-Bereich (11) zu und erhöht den im Vor-Schreib-Bereich (11) gespeicherten Male-von-Schreiben-Parameter um 1.

7. Verfahren zum Aufzeichnen von Chipverwendungs-Zustandsinformationen nach Anspruch 2, wobei der Chipverwendungs-Zustandsparameter den Male-von-Kommunikations-Interferenz-Parameter umfasst und die Steuereinheit (20) auf dem Chip, die den im Vor-Schreib-Bereich (11) gespeicherten Chipverwendungs-Zustandsparameter aktualisiert, wenn die Steuereinheit (20) auf dem Chip das KommunikationsInterferenzsignal beobachtet, Folgendes umfasst:
wenn der Chip in einem Nicht-Lese-Schreib-Zustand ist und wenn die Steuereinheit (20) auf dem Chip ein Hoch-Impulssignal von der Abbildungsvorrichtung beobachtet, greift die Steuereinheit (20) auf den Vor-Schreib-Bereich (11) zu und erhöht den im Vor-Schreib-Bereich (11) gespeicherten Male-von-Kommunikations-Interferenz-Parameter um 1;
wenn der Chip in einem Lese-Schreib-Zustand ist, vergleicht die Steuereinheit (20) auf dem Chip eine Spannung des erhaltenen Kommunikationssignals mit einem vorbestimmten Spannungs-Schwellenwert, wenn die Spannung des Kommunikationssignals den Spannungs-Schwellenwert überschreitet, greift die Steuereinheit (20) auf den Vor-Schreib-Bereich (11) zu und erhöht den im Vor-Schreib-Bereich (11) gespeicherten Male-von-Kommunikations-Interferenz-Parameter um 1.

8. Chip einer Abbildungsbox, umfassend: ein Substrat, und eine Informationsspeichereinheit (10) und eine Steuereinheit (20), die auf dem Substrat bereitgestellt sind, wobei die Informationsspeichereinheit (10) einen Vor-Schreib-Bereich (11) und einen normalen Lese-Schreib-Bereich (12) umfasst wobei der Vor-Schreib-Bereich (11) zum Speichern eines Chipverwendungs-Zustandsparameters des Chips verwendet wird, wobei die Steuereinheit (20) konfiguriert ist, wenn der Chip einen Lese-Schreib-Operationsbefehl einer Abbildungsvorrichtung erhält oder wenn die Steuereinheit (20) auf dem Chip ein Kommunikationsinterferenzsignal beobachtet, zunächst auf eine Adresse eines Speicherbereichs (111) im Vor-Schreib-Bereich (11) zu verweisen und den im Vor-Schreib-Bereich (11) gespeicherten Chipverwendungs-Zustandsparameter zu aktualisieren, wobei die Steuereinheit (20) ferner konfiguriert ist, auf eine Adresse des Speicherbereichs (121) im normalen Lese-Schreib-Bereich (12) zu verweisen und in jedem Speicherbereich aufgezeichnete Daten im normalen Lese-Schreib-Bereich (12) zu aktualisieren, nachdem die Steuereinheit (20) den im Vor-Schreib-Bereich (11) gespeicherten Chipverwendungs-Zustandsparameter aktualisiert.

9. Chip einer Abbildungsbox nach Anspruch 8, wobei der im Vor-Schreib-Bereich (11) gespeicherte Chipverwendungs-Zustandsparameter Folgendes umfasst:
einen oder mehrere der Folgenden: einen Male-von-Schreiben-Parameter, einen normalen Kommunikationsparameter, einen Male-von-Lesen-Parameter, einen Male-von-Kommunikationsfehler-Parameter und einen Male-von-Kommunikations-Interferenz-Parameter.

10. Chip einer Abbildungsbox nach Anspruch 9, wobei, wenn der Chipverwendungs-Zustandsparameter den Male-von-Schreiben-Parameter umfasst, die Steuereinheit spezifisch konfiguriert ist, auf den Vor-Schreib-Bereich (11) zuzugreifen und den im Vor-Schreib-Bereich (11) gespeicherten Male-von-Schreiben-Parameter um 1 zu erhöhen, wenn der Chip einen von der Abbildungsvorrichtung gesendeten Schreib-Operationsbefehl erhält.

11. Chip einer Abbildungsbox nach Anspruch 10, wobei, wenn der Chipverwendungs-Zustandsparameter ferner den normalen Kommunikationsparameter umfasst, die Steuereinheit ferner konfiguriert ist, auf den Vor-Schreib-Bereich (11) zuzugreifen und den im Vor-Schreib-Bereich (11) gespeicherten normalen Kommunikationsparameter um 1 zu erhöhen, wenn sie bestimmt, dass von der Abbildungsvorrichtung an den Chip geschriebene Daten erfolgreich in die Informationsspeichereinheit (10) geschrieben worden ist.

12. Chip einer Abbildungsbox nach Anspruch 9, wobei der Chipverwendungs-Zustandsparameter den Male-von-Kommunikationsfehler-Parameter umfasst, die Steuereinheit (20) spezifisch konfiguriert ist, auf den Vor-Schreib-Bereich (11) zuzugreifen und den im Vor-Schreib-Bereich (11) gespeicherten Male-von-Kommunikationsfehler-Parameter um 1 zu erhöhen, wenn der Chip einen von der Abbildungsvorrichtung gesendeten Schreib-Operationsbefehl erhält; auf den Vor-Schreib-Bereich (11) zuzugreifen und den im Vor-Schreib-Bereich (11) gespeicherten Male-von-Kommunikationsfehler-Parameter um 1 zu verringern, wenn sie bestimmt, dass von der Abbildungsvorrichtung an den Chip geschriebene Daten erfolgreich in die Informationsspeichereinheit (10) geschrieben worden sind.

13. Chip einer Abbildungsbox nach Anspruch 9, wobei, wenn der Chipverwendungs-Zustandsparameter den Male-von-Lesen-Parameter umfasst, die Steuereinheit spezifisch konfiguriert ist, auf den Vor-Schreib-Bereich (11) zuzugreifen und den im Vor-Schreib-Bereich (11) gespeicherten Male-von-Lesen-Parameter um 1 zu erhöhen, wenn der Chip einen von der Abbildungsvorrichtung gesendeten Lesebefehl erhält.

14. Chip einer Abbildungsbox nach Anspruch 9, wobei der Chipverwendungs-Zustandsparameter den Male-von-Kommunikations-Interferenz-Parameter umfasst, wobei die Steuereinheit (20) spezifisch dazu konfiguriert ist: auf den Vor-Schreib-Bereich (11) zuzugreifen und den im Vor-Schreib-Bereich (11) gespeicherten Male-von-Kommunikations-Interferenz-Parameter um 1 zu erhöhen, wenn der Chip in einem Nicht-Lese-Schreib-Zustand ist und ein Hoch-Impulssignal von der Abbildungsvorrichtung beobachtet; eine Spannung des erhaltenen Kommunikationssignals mit einem vorbestimmten Spannungs-Schwellenwert zu vergleichen, wenn der Chip in einem Lese-Schreib-Zustand ist, und auf den Vor-Schreib-Bereich (11) zuzugreifen und den im Vor-Schreib-Bereich (11) gespeicherten Male-von-Kommunikations-Interferenz-Parameter um 1 zu erhöhen, wenn die Spannung des Kommunikationssignals den Spannungs-Schwellenwert überschreitet.

15. Abbildungsbox, umfassend einen Chip einer Abbildungsbox nach einem der Ansprüche 8 bis 14.

## Revendications

1. Procédé d'enregistrement d'informations d'état d'utilisation de puce dans une puce d'un boîtier d'imagerie, dans lequel la puce comprend un substrat, et une unité de stockage d'informations (10) et une unité de commande (20) qui sont disposées sur le substrat, l'unité de stockage d'informations (10) comprenant une zone avant écriture (11) et une zone de lecture-écriture normale (12), la zone avant écriture (11) étant utilisée pour stocker un paramètre d'état d'utilisation de puce de la puce, le procédé comprenant le fait que :
lorsque la puce reçoit une commande d'opération de lecture/écriture envoyée par un dispositif d'imagerie ou lorsque l'unité de commande (20) sur la puce surveille un signal d'interférence de communication, l'unité de commande (20) désigne d'abord une adresse d'une zone de stockage (111) dans la zone avant écriture (11) et actualise le paramètre d'état d'utilisation de puce stocké dans la zone avant écriture (11) ;
l'unité de commande (20) désignant une adresse de la zone de stockage (121) dans la zone de lecture-écriture normale (12) et actualisant des données enregistrées dans chaque zone de stockage dans la zone de lecture-écriture normale (12) après que l'unité de commande (20) a actualisé le paramètre d'état d'utilisation de puce stocké dans zone avant écriture (11).

2. Procédé d'enregistrement d'informations d'état d'utilisation de puce selon la revendication 1, dans lequel le paramètre d'état d'utilisation de puce comprend :
un ou plusieurs des paramètres suivants : un paramètre de moments d'écriture, un paramètre de communication normale, un paramètre de moments de lecture, un paramètre de moments de défaillance de communication et un paramètre de moments d'interférence de communication.

3. Procédé d'enregistrement d'informations d'état d'utilisation de puce selon la revendication 2, dans lequel le paramètre d'informations d'état d'utilisation de puce comprend le paramètre de moments d'écriture et l'unité de commande (20) sur la puce actualisant le paramètre d'état d'utilisation de puce stocké dans la zone avant écriture (11) lorsque la puce reçoit la commande d'opération de lecture/écriture envoyée par le dispositif d'imagerie comprend le fait que :
lorsque la puce reçoit une commande d'opération d'écriture envoyée par le dispositif d'imagerie, l'unité de commande (20) sur la puce accède à la zone avant écriture (11) et augmente le paramètre de moments d'écriture stocké dans la zone avant écriture (11) par 1.

4. Procédé d'enregistrement d'informations d'état d'utilisation de puce selon la revendication 3, dans lequel le paramètre d'état d'utilisation de puce comprend en outre le paramètre de communication normale, le procédé comprenant en outre le fait que :
lorsque l'unité de commande (20) sur la puce détermine que des données écrites par le dispositif d'imagerie à destination de la puce ont été correctement écrites dans l'unité de stockage d'informations (10), l'unité de commande (20) accède à la zone avant écriture (11) et augmente le paramètre de communication normale stocké dans la zone avant écriture (11) par 1.

5. Procédé d'enregistrement d'informations d'état d'utilisation de puce selon la revendication 2, dans lequel le paramètre d'état d'utilisation de puce comprend le paramètre de moments de défaillance de communication et l'unité de commande (20) sur la puce actualisant le paramètre d'état d'utilisation de puce stocké dans la zone avant écriture (11) lorsque la puce reçoit la commande d'opération de lecture/écriture envoyée par le dispositif d'imagerie comprend le fait que :
lorsque la puce reçoit une commande d'opération d'écriture envoyée par le dispositif d'imagerie, l'unité de commande (20) sur la puce accède à la zone avant écriture (11) et augmente le paramètre de moments de défaillance de communication stocké dans la zone avant écriture (11) par 1 ;
lorsque l'unité de commande (20) sur la puce détermine que des données écrites par le dispositif d'imagerie à destination de la puce ont été écrites correctement dans l'unité de stockage d'informations (10), l'unité de commande (20) accède à la zone avant écriture (11) et réduit le paramètre de moments de défaillance de communication stocké dans la zone avant écriture (11) par 1.

6. Procédé d'enregistrement d'informations d'état d'utilisation de puce selon la revendication 2, dans lequel le paramètre d'état d'utilisation de puce comprend le paramètre de moments de lecture, et l'unité de commande (20) sur la puce actualisant le paramètre d'état d'utilisation de puce stocké dans la zone avant écriture (11) lorsque la puce reçoit la commande d'opération de lecture/écriture envoyée par le dispositif d'imagerie comprend le fait que :
lorsque la puce reçoit une commande de lecture envoyée par le dispositif d'imagerie, l'unité de commande (20) sur la puce accède à la zone avant écriture (11) et augmente le paramètre de moments de lecture stocké dans la zone avant écriture (11) par 1.

7. Procédé d'enregistrement d'informations d'état d'utilisation de puce selon la revendication 2, dans lequel le paramètre d'état d'utilisation de puce comprend le paramètre de moments d'interférence de communication et l'unité de commande (20) sur la puce actualisant le paramètre d'état d'utilisation de puce stocké dans la zone avant écriture (11) lorsque l'unité de commande (20) sur la puce surveille le signal d'interférence de communication comprend le fait que :
lorsque la puce est dans un état de non-lecture-écriture, et lorsque l'unité de commande (20) sur la puce surveille un signal d'impulsion élevée provenant du dispositif d'imagerie, l'unité de commande (20) accède à la zone avant écriture (11) et augmente le paramètre de moments d'interférence de communication stocké dans la zone avant écriture (11) par 1 ;
lorsque la puce est dans un état de lecture-écriture, l'unité de commande (20) sur la puce compare une tension du signal de communication reçu à un seuil de tension prédéfini, lorsque la tension du signal de communication excède le seuil de tension, l'unité de commande (20) accède à la zone avant écriture (11) et augmente le paramètre de moments d'interférence de communication stocké dans la zone avant écriture (11) par 1.

8. Puce d'un boîtier d'imagerie comprenant : un substrat, et une unité de stockage d'informations (10) et une unité de commande (20) qui sont disposées sur le substrat, l'unité de stockage d'informations (10) comprenant une zone avant écriture (11) et une zone de lecture-écriture normale (12), la zone avant écriture (11) étant utilisée pour stocker un paramètre d'état d'utilisation de puce de la puce, l'unité de commande (20) étant conçue pour, lorsque la puce reçoit une commande d'opération de lecture/écriture d'un dispositif d'imagerie ou lorsque l'unité de commande (20) sur la puce surveille un signal d'interférence de communication, d'abord désigner une adresse d'une unité de stockage (111) dans la zone avant écriture (11) et actualiser le paramètre d'état d'utilisation de puce stocké dans la zone avant écriture (11), l'unité de commande (20) étant en outre conçue pour désigner une adresse de la zone de stockage (121) dans la zone de lecture-écriture normale (12) et actualiser des données enregistrées dans chaque zone de stockage dans la zone de lecture-écriture normale (12) après que l'unité de commande (20) a actualisé le paramètre d'état d'utilisation de puce stocké dans la zone avant écriture (11).

9. Puce d'un boîtier d'imagerie selon la revendication 8, dans lequel le paramètre d'état d'utilisation de puce stocké dans la zone avant écriture (11) comprend :
au moins un élément parmi les suivants : un paramètre de moments d'écriture, un paramètre de communication normale, un paramètre de moments de lecture, un paramètre de moments de défaillance de communication et un paramètre de moments d'interférence de communication.

10. Puce d'un boîtier d'imagerie selon la revendication 9, dans lequel lorsque le paramètre d'état d'utilisation de puce comprend le paramètre de moments d'écriture, l'unité de commande est spécifiquement conçue pour accéder à la zone avant écriture (11) et augmenter le paramètre de moments d'écriture stocké dans la zone avant écriture (11) par 1 lorsque la puce reçoit une commande d'opération d'écriture envoyée par le dispositif d'imagerie.

11. Puce d'un boîtier d'imagerie selon la revendication 10, dans lequel lorsque le paramètre d'état d'utilisation de puce comprend en outre le paramètre de communication normale, l'unité de commande est en outre conçue pour accéder à la zone avant écriture (11) et augmenter le paramètre de communication normale stocké dans la zone avant écriture (11) par 1 lorsque l'on détermine que des données écrites par le dispositif d'imagerie à destination de la puce ont été correctement écrites dans l'unité de stockage d'informations (10).

12. Puce d'un boîtier d'imagerie selon la revendication 9, dans lequel le paramètre d'informations d'état d'utilisation de puce comprend le paramètre de moments de défaillance de communication, l'unité de commande (20) est spécifiquement conçue pour accéder à la zone avant écriture (11) et augmenter le paramètre de moments de défaillance de communication stocké dans la zone avant écriture (11) par 1 lorsque la puce reçoit une commande d'opération d'écriture envoyée par le dispositif d'imagerie ; accéder à la zone avant écriture (11) et réduire le paramètre de moments de défaillance de communication stocké dans la zone avant écriture (11) par 1 lorsque l'on détermine que des données écrites par le dispositif d'imagerie à destination de la puce ont été correctement écrites dans l'unité de stockage d'informations (10).

13. Puce d'un boîtier d'imagerie selon la revendication 9, dans laquelle, lorsque le paramètre d'état d'utilisation de puce comprend le paramètre de moments de lecture, l'unité de commande est spécifiquement conçue pour accéder à la zone avant écriture (11) et augmenter le paramètre de moments de lecture stocké dans la zone avant écriture (11) par 1 lorsque la puce reçoit une commande de lecture envoyée par le dispositif d'imagerie.

14. Puce d'un boîtier d'imagerie selon la revendication 9, dans laquelle le paramètre d'état d'utilisation de puce comprend le paramètre de moments d'interférence de communication, l'unité de commande (20) étant spécifiquement conçue pour : accéder à la zone avant écriture (11) et augmenter le paramètre de moments d'interférence de communication stocké dans la zone avant écriture (11) par 1 lorsque la puce est dans un état de non-lecture-écriture et surveille un signal d'impulsion élevée provenant du dispositif d'imagerie ; comparer une tension du signal de communication reçu à un seuil de tension prédéfini lorsque la puce est dans un état de lecture-écriture, et accéder à la zone avant écriture (11) et augmenter les moments de paramètre d'interférence de communication stockés dans la zone avant écriture (11) par 1 lorsque la tension du signal de communication excède le seuil de tension.

15. Boîtier d'imagerie, comprenant une puce d'un boîtier d'imagerie selon l'une quelconque des revendications 8 à 14.
